# EUROPEAN PATENT SPECIFICATION

(11) **EP 4 617 814 B1**
(45) Date of publication and mention of the grant of the patent: **06.05.2026**
(21) Application number: 24177867.9
(22) Date of filing: 24.05.2024
(51) Int. Cl.: G05D 1/242, G05D 1/246, G05D 1/622, G05D 105/10, G05D 107/40, G05D 109/10, G05D 111/10, G05D 1/648

(54) **SELF-MOVING ROBOT, OBSTACLE CROSSING METHOD, OBSTACLE CROSSING SYSTEM, AND COMPUTER READABLE STORAGE MEDIUM**
SELBSTBEWEGENDER ROBOTER, HINDERNISÜBERQUERUNGSVERFAHREN, HINDERNISÜBERQUERUNGSSYSTEM UND COMPUTERLESBARES SPEICHERMEDIUM
ROBOT AUTOMOTEUR, PROCÉDÉ DE FRANCHISSEMENT D'OBSTACLE, SYSTÈME DE FRANCHISSEMENT D'OBSTACLE ET SUPPORT D'INFORMATIONS LISIBLE PAR ORDINATEUR

(30) Priority: 14.03.2024 CN 202410291902
(43) Date of publication of application: 17.09.2025
(73) Proprietor: Dreame Innovation Technology (Suzhou) Co., Ltd., Suzhou, Jiangsu 215000 (CN)
(72) Inventor: YAO, Nan, Suzhou, Jiangsu, 215000 (CN)
(74) Representative: Herrero & Asociados, S.L.

(56) References cited:
- WO-A1-2023/133743
- US-A1- 2017 090 456

## Description

### TECHNICAL FIELD

The present application relates to a technical field of walking of a self-moving robot, and more particularly, to a self-moving robot, an obstacle crossing method, an obstacle crossing system, and a computer readable storage medium.

### BACKGROUND

With the development of artificial intelligence technologies, various self-moving robots with automatic mobile functions appear, such as a robot vacuum cleaner. The robot vacuum cleaner is an automatic household appliance, which may be used to clean the floor instead of manually cleaning the floor. Generally, sundries on the floor are first sucked into a dust box and then the floor is cleaned. In the operation of a self-moving robot such as a robot vacuum cleaner, a sensor is generally used to sense an obstacle in front of the sensor, and a corresponding obstacle avoidance strategy is determined based on a type of obstacle, to complete a cleaning task with the highest efficiency.

For example, when the sensor senses that there is an obstacle at a certain distance in front of the sensor, the self-moving robot moves backward and moves in another direction to pass the obstacle for a subsequent cleaning task. When the sensor senses that there is no obstacle in front of it, the self-moving robot will move forward all the way and perform a cleaning operation.

For another example, the robot vacuum cleaner has a certain obstacle avoidance capability. If a height of the obstacle is lower than a preset height, the robot vacuum cleaner may directly pass the obstacle. For a target obstacle whose height is higher than the preset height, the self-moving robot has improved to have an active obstacle crossing component, and the self-moving robot may activate the active obstacle crossing component at the obstacle to lift the robot vacuum cleaner, and improve the obstacle crossing capability of the robot vacuum cleaner to pass the target obstacle.

The patent application CN111142526A discloses a method for determining an obstacle type and an obstacle crossing strategy, but does not disclose an obstacle crossing method of a self-moving robot having an active obstacle crossing component. It is time-consuming to activate the active obstacle crossing component to pass the target obstacle, and thus cleaning efficiency is reduced. During the crossing process, the robot vacuum cleaner may contact, collide, and friction with the target obstacle, and may cause wear and tear to the robot vacuum cleaner, thereby reducing the service life of the robot. However, for a region behind the target obstacle, the cleaning task is not necessarily urgent, and it is not required to clean the region every time. In general, a comprehensive consideration is required for the frequency at which the active obstacle crossing component is activated or not required to be activated by the self-moving robot to pass the obstacle.

Therefore, whether the self-moving robot having the active obstacle crossing component needs to activate the active obstacle crossing component and whether the self-moving robot needs to pass the target obstacle to clean the target region are problems to be comprehensively considered, and there is a need for the obstacle crossing method for improving the cleaning efficiency and reducing the wear and tear of the self-moving robot.

WO2023133743A1 discloses a mobile apparatus includes a frame (01) and multifunctional mechanical legs (02) connected to the frame (01); and further includes at least one of a fourth motion mechanism configured to enable a base of the mechanical legs (02) to realize a lifting motion and/or a forward-backward motion, and/or a rolling-type travelling mechanism. Each mechanical leg (02) includes a first joint portion (101), a first connecting rod (102), a second joint portion (103) and a second connecting rod (104), which are sequentially connected, the root of the first joint portion (101) being connected to the frame (01).

US20170090456A1 discloses an autonomous cleaning robot performs a cleaning function and determines if an obstacle is in its path while performing the cleaning function. When an obstacle is in its path, the autonomous cleaning robot determines if a height of the obstacle is under a clearance height of the autonomous cleaning robot. When the height of the obstacle is under the clearance height of the autonomous cleaning robot, the autonomous cleaning robot determines if the obstacle is to be avoided.

### SUMMARY

The invention is set out in the appended set of claims

### BRIEF DESCRIPTION OF THE DRAWINGS

The accompanying drawings, which are included in and form a part of the specification, illustrate exemplary embodiments, features, and aspects of the present application together with the description and serve to explain the principles of the present application.
FIG. 1 is a hardware block diagram of a computer terminal for an obstacle crossing method of a self-moving robot according to an embodiment of the present application.
FIG. 2 is a flow chart of an obstacle crossing method of a self-moving robot according to an embodiment of the present application.
FIG. 3 is a flow chart of another obstacle crossing method of a self-moving robot according to an embodiment of the present application.
FIG. 4 is a flow chart of yet another obstacle crossing method of a self-moving robot according to an embodiment of the present application.
FIG. 5 is a schematic block diagram of an obstacle crossing system for a self-moving robot according to an embodiment of the present application.

### DETAILED DESCRIPTION

Various exemplary embodiments, features, and aspects of the present application will be described in detail below with reference to the accompanying drawings. Same reference numerals in the accompanying drawings indicate elements of the same or similar function. Although various aspects of the embodiments are shown in the accompanying drawings, the accompanying drawings are not necessarily drawn to scale unless otherwise indicated.

The word "exemplary" as used herein means "serving as an example, an embodiment, or illustration". Any embodiment described herein as "exemplary" is not necessarily to be construed as superior to or better than other embodiments.

The same or similar reference numerals in the accompanying drawings of the embodiments of the present application correspond to same or similar components. In the description of the present application, it is to be understood that orientations or position relationships indicated by the terms "upper", "lower", "left", "right", "inner", "outer", etc., are based on orientations or position relationships shown in the accompanying drawings. The terms are used to facilitate and simplify the description of the present application, but not to indicate or imply that devices or elements referred to herein are required to have specific orientations or be constructed or operate in specific orientations. Accordingly, the terms describing the position relationships in the accompanying drawings are for illustrative purposes only and are not to be construed as limiting the present application. The particular meanings of the above terms may be understood by one of ordinary skill in the art in accordance with specific circumstances.

It should be noted that, in this context, the terms "comprise" "include" or any other variation thereof, are intended to cover a non-exclusive inclusion, such that a process, article, or apparatus that includes a set of elements includes not only those elements but also other elements not expressly listed, or further includes elements inherent to such process, article, or apparatus. Without further limitations, an element defined by the phrase "include a..." does not preclude the existence of another identical element in the process, article, or apparatus including that element.

It should be noted that the terms "first", "second", etc., in the specification, claims, and the accompanying drawings of the present application are used to distinguish between similar objects and do not be used to describe a particular order or sequence.

In addition, numerous specific details are set forth in the following detailed description to better illustrate the present application. It will be appreciated by those skilled in the art that the present application may be practiced without certain specific details. In some instances, methods, means, elements, and circuits well known to those skilled in the art have not been described in detail to help emphasize the concept of the present application.

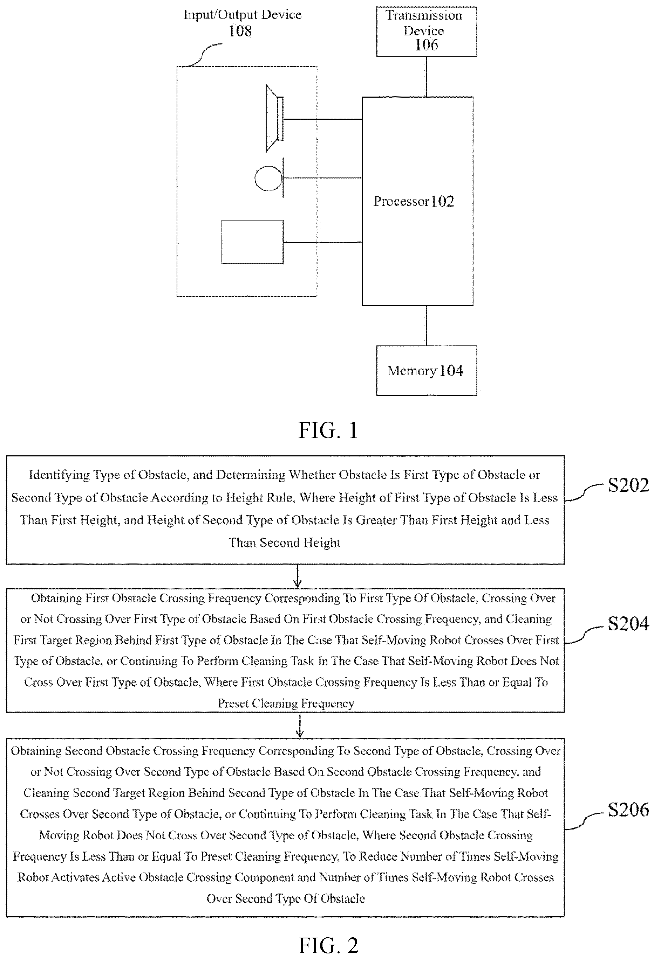

Method embodiments according to some embodiments of the present application may be executed in a computer terminal or similar computing apparatus. FIG. 1 is a hardware block diagram of a computer terminal for an obstacle crossing method of a self-moving robot according to an embodiment of the present application. As shown in FIG. 1, the computer terminal may include a processing apparatus of one or more (only one shown in FIG. 1) processors 102 (the processors 102 may include, but are not limited to, a microprocessor unit (MPU) or a programmable logic device (PLD), etc.) and a memory 104 for storing data. Alternatively, the computer terminal may further include a transmission device 106 for communication functions and an input/output device 108. It will be appreciated by those skilled in the art that the configuration shown in FIG. 1 is merely illustrative and does not limit the configuration of the computer terminal described above. For example, the computer terminal may further include more or fewer assemblies than shown in FIG. 1, or have a different configuration of functions equivalent to the functions shown in FIG. 1 or more than the functions shown in FIG. 1.

The memory 104 may be configured to store computer programs, for example, software programs and modules of application software, such as the computer program corresponding to the obstacle crossing method in an embodiment of the present application. The processor 102 may be configured to execute various functional applications and data processing by running the computer program stored in the memory 104, i.e., implementing the above-described method. The memory 104 may include high speed random access memory. The memory 104 may further include non-volatile memory, such as one or more magnetic storage apparatuses, flash memory, or other non-volatile solid state memory. In some examples, the memory 104 may further include a memory disposed remotely relative to the processor 102, which may be connected to the computer terminal via a network. Examples of such a network include, but are not limited to, the Internet, an enterprise intranet, a local area network, a mobile communication network, and combinations thereof.

The transmission device 106 is configured to receive or transmit data via a network. Specific examples of the network described above may include a wireless network provided by a communication provider of the computer terminal. In an example, the transmission device 106 includes a network interface controller (NIC), which may be connected to other network devices via a base station to communicate with the Internet. In an example, the transmission device 106 may be a radio frequency (RF) module for wirelessly communicating with the Internet.

In the process of performing a cleaning task on a preset region, a travel path of the self-moving robot may traverse the whole region to be cleaned to improve the cleaning effect, and not miss a portion of the region to be cleaned. For example, the self-moving robot may clean a room by using a "snake"-shaped cleaning path.

The self-moving robot may clean the preset region based on a preset cleaning frequency. The preset cleaning frequency f is a cleaning frequency of the self-moving robot for the preset region. The user may set a cleaning number of times P for the self-moving robot to clean the preset region within a certain task time period T. The preset cleaning frequency f is the cleaning number of times P divided by the task time period T. For example, if the task period T is one day and the self-moving robot cleans the preset region one time every day, the preset cleaning frequency f is one. For another example, if the task period T is two days and the self-moving robot cleans the preset region once every two days, the preset cleaning frequency f is 0.5.

The preset cleaning frequency may be predetermined by the user before the cleaning, may be adjusted in the cleaning process by the self-moving robot based on an actual condition, or may be reset by the user after one cleaning and before the next cleaning starts. The preset cleaning frequencies corresponding to different preset regions may be identical or different. The user may predetermine the preset cleaning frequency based on personal preferences and actual conditions. The user may determine the preset cleaning frequency based on the degree of susceptibility to dirt in the preset region, and the higher the degree of susceptibility to dirt is, the higher the preset cleaning frequency is. The user may determine the preset cleaning frequency based on whether the user frequently arrives at the preset region, and the higher the frequency at which the user arrives at the preset region, the higher the preset cleaning frequency.

During the cleaning process, an obstacle may occur on the travel path of the self-moving robot. The self-moving robot may need to pass the obstacle to complete the remaining portion of the cleaning task to complete the cleaning task. In response to such a situation, the present application provides an obstacle crossing method of the self-moving robot. The obstacle crossing method may be performed by the self-moving robot.

The self-moving robot has an active obstacle crossing component that may improve the obstacle crossing capability of the self-moving robot. The self-moving robot itself has a certain obstacle crossing capability without activating the active obstacle crossing component, and may cross over an obstacle of a certain height, for example, an obstacle having a height of no more than 3cm, such as no more than 2cm, no more than 1cm, or the like. In the case of activating the active obstacle crossing component, the self-moving robot may be raised as a whole by the active obstacle crossing component, so that the self-moving robot may cross over an obstacle having a higher height than the above certain height, for example, may cross over an obstacle having a height of no more than 5cm, such as no more than 4cm, no more than 3.5cm, or the like, and the active obstacle crossing component improves the obstacle crossing capability of the self-moving robot.

FIG. 2 is a flow chart of an obstacle crossing method of a self-moving robot according to an embodiment of the present application. The obstacle crossing method may be performed by the self-moving robot. As shown in FIG. 2, in the present embodiment, the obstacle crossing method may include steps S202-S206.

At Step S202, a type of the obstacle is identified, and it is determined whether the obstacle is a first type of obstacle or a second type of obstacle according to a height rule. A height of the first type of obstacle is less than a first height, and a height of the second type of obstacle is greater than the first height and less than a second height.

Optionally, in the case that the active obstacle crossing component is not activated, a maximum height of the obstacle that the self-moving robot may cross over is the first height. A maximum height of the obstacle that the self-moving robot may cross over in the case that the active obstacle crossing component is activated is the second height. The second height is greater than the first height.

Specifically, because the height of the first type of obstacle is less than the first height, the first type of obstacle may be an obstacle that the self-moving robot may cross over when the active obstacle crossing component is not activated. Because the height of the second type of obstacle is greater than the first height and less than the second height, the second type of obstacle may be an obstacle that the self-moving robot may cross over when the active obstacle crossing component is activated.

In some embodiments, the number of the first type of obstacles may be one or more, and the different first type of obstacles may have the same height or different heights. The number of the second type of obstacles may be one or more, and the different second type of obstacles may have the same height or different heights.

Optionally, the height of the first type of obstacle and the height of the second type of obstacle are determined by a structured light module in the self-moving robot by collecting point cloud data of the first type of obstacle and point cloud data of the second type of obstacle, respectively, to improve accuracy of determining the height of the first type of obstacle and the height of the second type of obstacle.

Specifically, after the structured light module collects the information of the obstacle on the travel path of the autonomous mobile device to obtain an ambient image. Various processes may be performed on the ambient image to extract the point cloud data of the obstacle from the ambient image. The self-moving robot may determine the height of the obstacle based on the point cloud data of the obstacle. In some embodiments, the obstacle is a step type of obstacle having a certain height. The type of obstacle may include, but is not limited to, steps, bump obstacles, or the like.

In some embodiments, the structured light module includes a camera module and a line laser emitter. During traveling, the self-moving robot may control the line laser emitter to externally emit a line laser light that may be reflected back when the line laser light is emitted into an object in a region in front of the self-moving robot. Meanwhile, the self-moving robot may collect the ambient image in the region in front of the self-moving robot. During this period, if an obstacle is detected by using the line laser light in the region in front of the self-moving robot, a laser line segment may be formed on the surface of the obstacle, and the laser line segment may be collected by the camera module. That is, the ambient image collected by the camera module includes the laser line segment formed after the line laser light emitted by the line laser emitter is emitted into an object.

A large number of pixels on the laser line segment in the ambient image may form the point cloud data of the obstacle corresponding to terrain (the point cloud data of the first type of obstacle and the point cloud data of the second type of obstacle). The self-moving robot may further determine the height of the obstacle based on the point cloud data of the obstacle. The method of determining the height of the obstacle based on the point cloud data of the obstacle is not limited to the present application. For example, the self-moving robot may input the point cloud data into a deep learning model to determine the height of the obstacle.

After determining the height of the obstacle, the self-moving robot may determine whether the obstacle is the first type of obstacle or the second type of obstacle based on the height rule. The height rule may be as follows: if the height of the obstacle is less than the first height, the self-moving robot determines that the obstacle is the first type of obstacle, or if the height of the obstacle is greater than the first height and less than the second height, the self-moving robot determines that the obstacle is the second type of obstacle.

In some embodiments, the height rule may be as follows: if the height of the obstacle is greater than the second height, the self-moving robot determines that the obstacle is a third type of obstacle. The self-moving robot cannot cross over the third type of obstacle even if the active obstacle crossing component is activated. The self-moving robot may bypass or avoid the third type of obstacle to complete the remaining portion of the cleaning task.

At Step S204, a first obstacle crossing frequency corresponding to the first type of obstacle is obtained, and the self-moving robot crosses over or does not cross over the first type of obstacle based on the first obstacle crossing frequency. A first target region behind the first type of obstacle is cleaned in the case that the self-moving robot crosses over the first type of obstacle. The self-moving robot continues to perform the cleaning task in the case that the self-moving robot does not cross over the first type of obstacle. The first obstacle crossing frequency is less than or equal to the preset cleaning frequency.

At Step S206, a second obstacle crossing frequency corresponding to the second type of obstacle is obtained, and the self-moving robot crosses over or does not cross over the second type of obstacle based on the second obstacle crossing frequency. A second target region behind the second type of obstacle is cleaned in the case that the self-moving robot crosses over the second type of obstacle. The self-moving robot continues to perform the cleaning task in the case that the self-moving robot does not cross over the second type of obstacle. The second obstacle crossing frequency is less than or equal to the preset cleaning frequency. The number of times the self-moving robot activates the active obstacle crossing component and the number of times the self-moving robot crosses over the second type of obstacle are reduced.

The self-moving robot may encounter the obstacle (the first type of obstacle or the second type of obstacle) when performing the cleaning task. The self-moving robot needs to cross over the obstacle to clean the target region (the first target region or the second target region) behind the obstacle. However, when the self-moving robot crosses over the obstacle, the self-moving robot contacts, collides, and frictions with the obstacle, and a process of crossing over the obstacle causes a certain amount of wear and tear on the self-moving robot, thereby reducing the service life thereof.

On the other hand, when the self-moving robot crosses over the second type of obstacle, it is necessary to activate the active obstacle crossing component. Activating the active obstacle-crossing component consumes a certain amount of time, thereby increasing the cleaning time, causing the wear and tear on the active obstacle crossing component, and reducing the service life of the active obstacle crossing component. The cleaning of the target region does not need to be performed in each task period. Therefore, the obstacle crossing strategy may be optimized. When the self-moving robot encounters the obstacle on one occasion, the self-moving robot does not cross over the obstacle and does not clean the target region. When the obstacle is encountered another time, the self-moving robot crosses over the obstacle and cleans the target region. Therefore, the number of obstacle crossing of the self-moving robot and the number of activations of the active obstacle crossing component are overall reduced, and the service life of the self-moving robot and the active obstacle crossing component are increased, while taking into account the cleaning of the target region.

Optionally, the first obstacle crossing frequency is a frequency at which the self-moving robot directly crosses over the first type of obstacle, and the second obstacle crossing frequency is a frequency at which the self-moving robot crosses over the second type of obstacle by using the active obstacle crossing component, so that the self-moving robot performs different obstacle crossing strategies on the first type of obstacle and the second type of obstacle, respectively.

The direct crossing over the first type of obstacle may be understood as the self-moving robot moving directly forward by the driving power of its own driving wheels to cross over the first type of obstacle without activating the active obstacle crossing component.

In some embodiments, the first obstacle crossing frequency f1 is the number of times P1 the self-moving robot crosses over the first type of obstacle within a certain task period T1. The first obstacle crossing frequency f1 is the number of times P1 divided by the task time period T1. If the task period T1 is one day and the number of times the self-moving robot crosses over the first type of obstacle every day is one, the first obstacle crossing frequency f1 is one. If the task period T1 is three days and the number of times the self-moving robot crosses over the first type of obstacle every three days is one, the preset first obstacle crossing frequency f1 is 1/3.

In other embodiments, the first obstacle crossing frequency is a ratio of a number of times the self-moving robot crosses over the first type of obstacle to a number of times the self-moving robot encounters the first type of obstacle. Encountering the first type of obstacle may be understood as the self-moving robot encountering the first type of obstacle on the travel path thereof while performing the cleaning task.

If the self-moving robot performs one crossing over the first type of obstacle every two times it encounters the first type of obstacle, the first obstacle crossing frequency is 1/2. If the self-moving robot performs one crossing over the first type of obstacle every three times it encounters the first type of obstacle, the first obstacle crossing frequency is 1/3.

In some embodiments, the second obstacle crossing frequency f2 is the number of times P2 the self-moving robot crosses over the second type of obstacle within a certain task period T2. If the task period T2 is one day and the number of times the self-moving robot crosses over the second type of obstacle every day is one, the second obstacle crossing frequency f2 is one. If the task period T2 is three days and the number of times the self-moving robot crosses over the second type of obstacle every three days is one, the second obstacle crossing frequency is 1/3.

In other embodiments, the second obstacle crossing frequency is a ratio of a number of times the self-moving robot crosses over the second type of obstacle to a number of times the self-moving robot encounters the second type of obstacle. Encountering the second type of obstacle may be understood as the self-moving robot encountering the second type of obstacle on the travel path thereof while performing the cleaning task.

If the self-moving robot performs one crossing over the second type of obstacle every two times it encounters the second type of obstacle, the second obstacle crossing frequency is 1/2. If the self-moving robot performs one crossing over the second type of obstacle every three times it encounters the second type of obstacle, the second obstacle crossing frequency is 1/3.

The first obstacle crossing frequency and/or the second obstacle crossing frequency may be preset by the user in the self-moving robot, or may be dynamically adjusted based on the actual conditions.

In some embodiments, the first obstacle crossing frequency is less than or equal to the preset cleaning frequency, and the self-moving robot may or may not cross over the first type of obstacle based on the first obstacle crossing frequency. The self-moving robot may clean the first target region behind the first type of obstacle in the case of crossing over the first type of obstacle. The self-moving robot continues to perform the cleaning task in the case that the self-moving robot does not cross over the first type of obstacle.

For example, the first obstacle crossing frequency is 1/3. If the self-moving robot last traveled over the first type of obstacle two days ago, the self-moving robot does not cross over the first type of obstacle at this time, bypasses the first type of obstacle, and continues to perform the cleaning task. If the self-moving robot last crossed over the first type of obstacle three days ago, the self-moving robot crosses over the first type of obstacle at this time and cleans the first target region.

For another example, if the first obstacle crossing frequency is 1/3, and the number of times the self-moving robot has encountered the first obstacle is two after the self-moving robot crossed over the first obstacle last time, the self-moving robot bypasses the first type of obstacle at this time without crossing over the first obstacle and continues to perform the cleaning task. The number of times the self-moving robot has encountered the first obstacle is three (including this time) after the self-moving robot crossed over the first obstacle last time, and the self-moving robot crosses over the first type of obstacle at this time and cleans the first target region.

The technical effect of an embodiment of the present application is as follows: the self-moving robot crosses over the first type of obstacle based on the first obstacle crossing frequency, and the self-moving robot may clean the first target region behind the first obstacle. When the first obstacle crossing frequency is less than the preset cleaning frequency, the number of times the self-moving robot crosses over the first type of obstacle may be reduced, the wear and tear of the self-moving robot generated in the process of crossing over the first type of obstacle may be reduced, and the service life of the self-moving robot may be increased.

In some embodiments, the second obstacle crossing frequency is less than the preset cleaning frequency, and the self-moving robot may or may not cross over the first type of obstacle based on the second obstacle crossing frequency. The self-moving robot may clean the second target region after the second type of obstacle in the case that the self-moving robot crosses over the second type of obstacle. The self-moving robot may continue to perform the cleaning task in the case that the self-moving robot does not cross over the second type of obstacle. When the self-moving robot crosses over the second type of obstacle, the active obstacle crossing component needs to be activated, and the second obstacle crossing frequency is less than the preset cleaning frequency, so that the number of times the self-moving robot activates the active obstacle crossing component and the number of times the self-moving robot crosses over the second type of obstacle may be reduced.

For example, the second obstacle crossing frequency is 1/4. If the self-moving robot last crossed over the second type of obstacle three days ago, the self-moving robot does not cross over the second type of obstacle at this time, bypasses the first type of obstacle, and continues to perform the cleaning task. If the self-moving robot last crossed over the second type of obstacle four days ago, the self-moving robot crosses over the second type of obstacle at this time and cleans the second target region.

For another example, if the second obstacle crossing frequency is 1/4 and the number of times the self-moving robot has encountered the second obstacle is three after the self-moving robot crossed over the second obstacle last time, the self-moving robot bypasses the second type of obstacle at this time without crossing over the second obstacle and continues to perform the cleaning task. The number of times the self-moving robot has encountered the second obstacle is three (including this time) after the self-moving robot crossed over the second obstacle last time, and the self-moving robot crosses over the second type of obstacle at this time and cleans the second target region.

The technical effect of an embodiment of the present application is as follows: the self-moving robot crosses over the second type of obstacle based on the second obstacle crossing frequency, the self-moving robot may clean the second target region behind the second obstacle, and the second obstacle crossing frequency is less than the preset cleaning frequency. Therefore, the number of times the self-moving robot crosses over the second type of obstacle may be reduced, the wear and tear of the self-moving robot generated in the process of crossing over the second type of obstacle may be reduced, and the service life of the self-moving robot may be increased. Meanwhile, the number of times the self-moving robot activates the active obstacle crossing component may be reduced, and since activating the active obstacle crossing component to cross over the second type of obstacle takes a certain amount of time, in the method of an embodiment of the present application, the cleaning time may be saved and the cleaning efficiency may be improved.

The first target region and the second target region do not need to be cleaned every time. In consideration of compromise, the self-moving robot does not need to cross over the first type of obstacle or the second type of obstacle each time to clean the first target region or the second target region when the self-moving robot performs the cleaning task. Therefore, the number of times the self-moving robot crosses over the first type of obstacle (when the first obstacle crossing frequency is less than the preset cleaning frequency) or the second type of obstacle may be reduced, the obstacle crossing loss of the self-moving robot may be reduced, the number of times of activating the active obstacle crossing component may be reduced, and the service life of the self-moving robot and the active obstacle crossing component may be increased. Taking into account the time consumed by the obstacle crossing process, in the method of an embodiment of the present application, the cleaning time may be saved and the cleaning efficiency may be improved while cleaning the first target region and the second target region.

Optionally, the cleaning of the second target region behind the second type of obstacle in the case that the self-moving robot crosses over the second type of obstacle includes: when the self-moving robot moves to within a preset distance from the second type of obstacle, activating the active obstacle crossing component to raise a height of at least a portion of a bottom of the self-moving robot, to allow the self-moving robot to cross over the second type of obstacle having the height greater than the first height and less than the second height. Therefore, a success rate in crossing obstacle is increased.

In some embodiments, the height of at least a portion of the bottom of the self-moving robot is raised, so that the height of the at least a portion of the bottom reaches a certain percentage of the height of the second type of obstacle. The certain percentage may include 70%, 80%, 90%, 100%, etc.

In some embodiments, the preset distance may be determined based on the height of the obstacle and/or the raised height of the at least a portion of the bottom of the self-moving robot by the active obstacle crossing component. The preset distance may be preset by the system, preset by the user in the self-moving robot, or determined in real time by the self-moving robot after the obstacle height has been determined.

By activating the active obstacle crossing component to raise the height of the at least a portion of the bottom of the self-moving robot when the self-moving robot moves to within the predetermined distance from the second type of obstacle, the success rate of the self-moving robot crossing over the second type of obstacle may be increased.

Optionally, there are a plurality of first type of obstacles, each of the first type of obstacle has a corresponding first obstacle crossing frequency. There are a plurality of second type of obstacles, and each of the second type of obstacles has a corresponding second obstacle crossing frequency. Therefore, the self-moving robot may perform different obstacle crossing strategies for different obstacles, thereby improving obstacle crossing flexibility of the self-moving robot.

In some embodiments, the self-moving robot determines the first obstacle crossing frequency corresponding to each of the first type of obstacles based on a height of each of the first type of obstacles. Since the higher the height the more difficult the obstacle is to be crossed over, the higher the height of the first type of obstacle, the lower the first obstacle crossing frequency corresponding to the first type of obstacle. The self-moving robot determines the second obstacle crossing frequency corresponding to each of the second type of obstacles based on a height of each of the second type of obstacles. Since the higher the height the more difficult the obstacle is to be crossed over, the higher the height of the second type of obstacle, the lower the second obstacle crossing frequency corresponding to the second type of obstacle.

In some embodiments, the user may preset a cleaning importance level of the first target region or a cleaning importance level of the second target region in the self-moving robot, and set a corresponding first weight and a corresponding second weight for the first type of obstacle and the second type of obstacle, respectively, based on the importance levels. The higher the importance level, the higher the corresponding weight. The self-moving robot may determine the first obstacle crossing frequency and the second obstacle crossing frequency, respectively, based on the first weight and the second weight.

In other embodiments, the self-moving robot may determine a frequency corresponding to an obstacle, that is, the first obstacle crossing frequency of the first type of obstacle or the second obstacle crossing frequency corresponding to the second type of obstacle, based on the height of the obstacle and the cleaning importance level of the target region corresponding to the obstacle.

Optionally, the second obstacle crossing frequency is less than the first obstacle crossing frequency to reduce the number of times the self-moving robot crosses over the second type of obstacle and the number of times the active obstacle crossing component is activated.

The height of the second type of obstacle is higher than the height of the first type of obstacle, and considering that the higher the height the more difficult the obstacle is to be crossed over, the second obstacle crossing frequency may be less than the first obstacle crossing frequency. Therefore, the self-moving robot may perform the different obstacle crossing strategies for the first type of obstacle and the second type of obstacle, respectively, thereby improving the obstacle crossing flexibility, overall reducing the number of crossing over the second type of obstacle, and reducing the number of times the self-moving robot activates the active obstacle crossing component and the number of times the self-moving robot crosses over the second type of obstacle. Therefore, the cleaning time is reduced and the wear and tear on the self-moving robot caused by the obstacle crossing action is reduced.

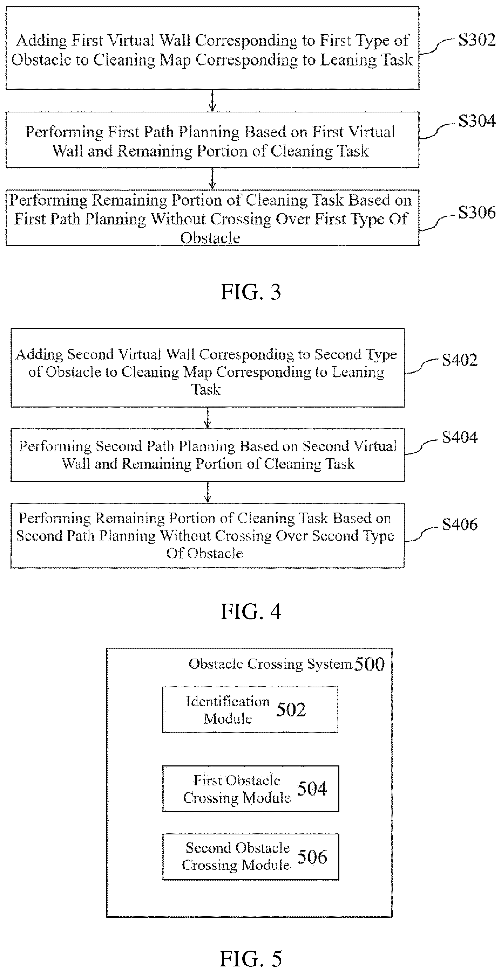

FIG. 3 is a flow chart of another obstacle crossing method of a self-moving robot according to an embodiment of the present application. The obstacle crossing method may be performed by the self-moving robot. As shown in FIG. 3, in the present embodiment, the obstacle crossing method may include steps S302, S304, and S306:

At Step S302, a first virtual wall corresponding to the first type of obstacle is added to a cleaning map corresponding to the cleaning task.

At Step S304, a first path planning is performed based on the first virtual wall and the remaining portion of the cleaning task.

At Step S306, a remaining portion of the cleaning task is performed based on the first path planning without crossing over the first type of obstacle to improve the cleaning efficiency.

In the case that the self-moving robot does not cross over the first type of obstacle, the self-moving robot bypasses the first type of obstacle, does not clean the first target region behind the first type of obstacle at this time, and leaves the first target region to be cleaned the next time the self-moving robot crosses over the first type of obstacle.

In some embodiments, to bypass the first type of obstacle, the self-moving robot may determine the first virtual wall corresponding to the first type of obstacle and add the first virtual wall to the cleaning map corresponding to the cleaning task.

The virtual wall is a dummy wall set for the self-moving robot, which is not actually present, but may be identified by the self-moving robot. For the self-moving robot, the virtual wall is an obstacle that cannot pass through, and once the virtual wall is identified, the self-moving robot needs to avoid the virtual wall.

In some embodiments, the self-moving robot may perform the first path planning based on the first virtual wall and the remaining portion of the cleaning tasks, and complete the remaining portion of the cleaning tasks based on the result of the first path planning. It will be appreciated that the result of the first path planning is an optimal path by which the self-moving robot may complete the remaining portion of the cleaning tasks without crossing over the first type of obstacle. The self-moving robot avoids the first type of obstacle based on the result of the first path planning, that is, does not cross over the first type of obstacle, to complete the remaining portion of the cleaning task, thereby improving the cleaning efficiency.

By adding the virtual wall to the cleaning map and performing the first path planning based on the virtual wall and the remaining portion of the cleaning tasks, it is possible to prevent the self-moving robot from repeatedly crossing over the first type of obstacle in the process of performing the remaining portion of the cleaning tasks, to improve and reduce the number of crossing over the first type of obstacle, to avoid omitting a region to be cleaned, and to avoid double cleaning, thereby improving the cleaning efficiency.

FIG. 4 is a flow chart of yet another obstacle crossing method of a self-moving robot according to an embodiment of the present application. The obstacle crossing method may be performed by the self-moving robot. As shown in FIG. 4, in the present embodiment, the obstacle crossing method may include steps S402, S404, and S406:

At Step S402, a second virtual wall corresponding to the second type of obstacle is added to a cleaning map corresponding to the cleaning task.

At Step S404, a second path planning is performed based on the second virtual wall and the remaining portion of the cleaning task.

At Step S406, a remaining portion of the cleaning task is performed based on the second path planning without crossing over the second type of obstacle to improve the cleaning efficiency.

In the case that the self-moving robot does not cross over the second type of obstacle, the self-moving robot bypasses the second type of obstacle, does not clean the second target region behind the second type of obstacle at this time, and leaves the second target region to be cleaned the next time the self-moving robot crosses over the second type of obstacle. Since the self-moving robot does not cross over the second type of obstacle, the self-moving robot does not need to activate the active obstacle crossing component, thereby reducing the frequency of using the active obstacle crossing component, reducing the wear and tear of use of the active obstacle crossing component, and increasing the service life of the active obstacle crossing component.

In some embodiments, to bypass the second type of obstacle, the self-moving robot may determine the second virtual wall corresponding to the second type of obstacle and add the second virtual wall to the cleaning map corresponding to the cleaning task.

The virtual wall is a dummy wall set for the self-moving robot, which is not actually present, but may be identified by the self-moving robot. For the self-moving robot, the virtual wall is an obstacle that cannot pass through, and once the virtual wall is identified, the self-moving robot needs to avoid the virtual wall.

In some embodiments, the self-moving robot may perform the second path planning based on the second virtual wall and the remaining portion of the cleaning tasks, and complete the remaining portion of the cleaning tasks based on the result of the second path planning. It will be appreciated that the result of the second path planning is an optimal path by which the self-moving robot may complete the remaining portion of the cleaning tasks without crossing over the second type of obstacle. The self-moving robot avoids the second type of obstacle based on the result of the second path planning, that is, does not cross over the second type of obstacle, to complete the remaining portion of the cleaning task, thereby improving the cleaning efficiency. At the same time, the number of times the active obstacle crossing component is activated is reduced, and the cleaning time is reduced.

By adding the virtual wall to the cleaning map and performing the first path planning based on the virtual wall and the remaining portion of the cleaning tasks, it is possible to prevent the self-moving robot from repeatedly crossing over the obstacle (including the second type of obstacle) in the process of performing the remaining portion of the cleaning tasks, to reduce the number of crossing over the second type of obstacle, to avoid activating the active obstacle crossing component, to avoid omitting a region to be cleaned, and to avoid double cleaning, thereby improving the cleaning efficiency.

FIG. 5 is a schematic block diagram of an obstacle crossing system for a self-moving robot according to an embodiment of the present application. As shown in FIG. 5, the obstacle crossing system includes an identification module 502, a first obstacle crossing module 504, and a second obstacle crossing module 506.

The identification module 502 is configured to identify the type of the obstacle, and determine whether the obstacle is the first obstacle or the second obstacle according to the height rule. The height of the first type of obstacle is less than the first height, and the height of the second type of obstacle is greater than the first height and less than the second height.

Optionally, in the case that the active obstacle crossing component is not activated, the maximum height of the obstacle that the self-moving robot may cross over is the first height. The maximum height of the obstacle that the self-moving robot may cross over in the case that the active obstacle crossing component is activated is the second height. The second height is greater than the first height.

Specifically, because the height of the first type of obstacle is less than the first height, the first type of obstacle may be an obstacle that the self-moving robot may cross over when the active obstacle crossing component is not activated. Because the height of the second type of obstacle is greater than the first height and less than the second height, the second type of obstacle may be an obstacle that the self-moving robot may cross over when the active obstacle crossing component is activated.

The first obstacle crossing module 504 is configured to obtain the first obstacle crossing frequency corresponding to the first type of obstacle. The self-moving robot crosses over or does not cross over the first type of obstacle based on the first obstacle crossing frequency. The first target region behind the first type of obstacle is cleaned in the case that the self-moving robot crosses over the first type of obstacle. The self-moving robot continues to perform the cleaning task in the case that the self-moving robot does not cross over the first type of obstacle. The first obstacle crossing frequency is less than or equal to the preset cleaning frequency.

The second obstacle crossing module 506 is configured to obtain a second obstacle crossing frequency corresponding to the second type of obstacle. The self-moving robot crosses over or does not cross over the second type of obstacle based on the second obstacle crossing frequency. The second target region behind the second type of obstacle is cleaned in the case that the self-moving robot crosses over the second type of obstacle. The self-moving robot continues to perform the cleaning task in the case that the self-moving robot does not cross over the second type of obstacle. The second obstacle crossing frequency is less than or equal to the preset cleaning frequency. The number of times the self-moving robot activates the active obstacle crossing component and the number of times the self-moving robot crosses over the second type of obstacle are reduced. The preset cleaning frequency is a frequency at which the self-moving robot performs the cleaning task.

Optionally, the first obstacle crossing frequency is a frequency at which the self-moving robot directly crosses over the first type of obstacle, and the second obstacle crossing frequency is a frequency at which the self-moving robot crosses over the second type of obstacle by using the active obstacle crossing component, so that the self-moving robot performs the different obstacle crossing strategies on the first type of obstacle and the second type of obstacle, respectively.

The direct crossing over the first type of obstacle may be understood as the self-moving robot moving directly forward by the driving power of its own driving wheels to cross over the first type of obstacle without activating the active obstacle crossing component.

In some embodiments, the first obstacle crossing frequency f1 is the number of times P1 the self-moving robot crosses over the first type of obstacle within the certain task period T1. The first obstacle crossing frequency f1 is the number of times P1 divided by the task time period T1. If the task period T1 is one day and the number of times the self-moving robot crosses over the first type of obstacle every day is one, the first obstacle crossing frequency f1 is one. If the task period T1 is three days and the number of times the self-moving robot crosses over the first type of obstacle every three days is one, the preset first obstacle crossing frequency f1 is 1/3.

In other embodiments, the first obstacle crossing frequency is a ratio of a number of times the self-moving robot crosses over the first type of obstacle to a number of times the self-moving robot encounters the first type of obstacle. Encountering the first type of obstacle may be understood as the self-moving robot encountering the first type of obstacle on the travel path thereof while performing the cleaning task.

If the self-moving robot performs one crossing over the first type of obstacle every two times it encounters the first type of obstacle, the first obstacle crossing frequency is 1/2. If the self-moving robot performs one crossing over the first type of obstacle every three times it encounters the first type of obstacle, the first obstacle crossing frequency is 1/3.

In some embodiments, the second obstacle crossing frequency f2 is the number of times P2 the self-moving robot crosses over the second type of obstacle within the certain task period T2. If the task period T2 is one day and the number of times the self-moving robot crosses over the second type of obstacle every day is one, the second obstacle crossing frequency f2 is one. If the task period T2 is three days and the number of times the self-moving robot crosses over the second type of obstacle every three days is one, the second obstacle crossing frequency is 1/3.

In other embodiments, the second obstacle crossing frequency is a ratio of a number of times the self-moving robot crosses over the second type of obstacle to a number of times the self-moving robot encounters the second type of obstacle. Encountering the second type of obstacle may be understood as the self-moving robot encountering the second type of obstacle on the travel path thereof while performing the cleaning task.

If the self-moving robot performs one crossing over the second type of obstacle every two times it encounters the second type of obstacle, the second obstacle crossing frequency is 1/2. If the self-moving robot performs one crossing over the second type of obstacle every three times it encounters the second type of obstacle, the second obstacle crossing frequency is 1/3.

The first obstacle crossing frequency and/or the second obstacle crossing frequency may be preset by the user in the self-moving robot, or may be dynamically adjusted based on the actual conditions.

The technical effect of an embodiment of the present application is as follows: the self-moving robot crosses over the first type of obstacle based on the first obstacle crossing frequency, and the self-moving robot may clean the first target region behind the first obstacle. When the first obstacle crossing frequency is less than the preset cleaning frequency, the number of times the self-moving robot crosses over the first type of obstacle may be reduced, the wear and tear of the self-moving robot generated in the process of crossing over the first type of obstacle may be reduced, and the service life of the self-moving robot may be increased.

The self-moving robot crosses over the second type of obstacle based on the second obstacle crossing frequency, the self-moving robot may clean the second target region behind the second obstacle, and the second obstacle crossing frequency is less than the preset cleaning frequency. Therefore, the number of times the self-moving robot crosses over the second type of obstacle may be reduced, the wear and tear of the self-moving robot generated in the process of crossing over the second type of obstacle may be reduced, and the service life of the self-moving robot may be increased. Meanwhile, the number of times the self-moving robot activates the active obstacle crossing component may be reduced, and since activating the active obstacle crossing component to cross over the second type of obstacle takes a certain amount of time, in the method of an embodiment of the present application, the cleaning time may be saved and the cleaning efficiency may be improved.

The first target region and the second target region do not need to be cleaned every time. In consideration of compromise, the self-moving robot does not need to cross over the first type of obstacle or the second type of obstacle each time to clean the first target region or the second target region when the self-moving robot performs the cleaning task. Therefore, the number of times the self-moving robot crosses over the first type of obstacle (when the first obstacle crossing frequency is less than the preset cleaning frequency) or the second type of obstacle may be reduced, the obstacle crossing loss of the self-moving robot may be reduced, the number of times of activating the active obstacle crossing component may be reduced, and the service life of the self-moving robot and the active obstacle crossing component may be increased. Taking into account the time consumed by the obstacle crossing process, in the method of an embodiment of the present application, the cleaning time may be saved and the cleaning efficiency may be improved while cleaning the first target region and the second target region.

The obstacle crossing system of the self-moving robot shown in FIG. 5 may perform the obstacle crossing method of the self-moving robot in any of the embodiments shown in FIGS. 2 to 4. For a part not described in detail in this embodiment, reference may be made to the related description of the embodiments shown in FIGS. 2 to 4, and details are not described herein.

The present application further discloses a self-moving robot, which includes the obstacle crossing system, and performs the obstacle crossing method of the self-moving robot according to any of the above embodiments shown in FIGS. 2 to 4. Reference may be made to related descriptions of the embodiments shown in FIGS. 2 to 5, and details are not described herein.

The present application may further relate to a system, method, and/or computer program product. The computer program product may include a computer readable storage medium having computer readable program instructions embodied thereon to allow a processor to implement the obstacle crossing method of the self-moving robot of an embodiment of the present application.

The computer-readable storage medium may be a tangible device that may hold and store instructions for use by an instruction execution device. The computer-readable storage medium may be, for example, but not limited to, an electrical storage device, a magnetic storage device, an optical storage device, an electromagnetic storage device, a semiconductor storage device, or any suitable combination thereof. More specific examples (non-exhaustive lists) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoding device, e.g., a punch card or in-groove bump structure on which instructions are stored, or any suitable combination thereof. As used herein, a computer-readable storage medium is not to be construed as an instantaneous signal itself, such as a radio wave or other freely propagating electromagnetic wave, an electromagnetic wave propagating through a waveguide or other transmission medium (e.g., an optical pulse through a fiber optic cable), or an electrical signal transmitted through a wire.

The computer readable program instructions described herein may be downloaded from a computer readable storage medium to various computing/processing devices, or to an external computer or external storage device via a network, such as the Internet, a local area network, a wide area network, and/or a wireless network. The network may include copper transmission cables, fiber optic transmission, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium in the respective computing/processing device.

The computer program instructions used to perform the obstacle crossing method of the self-moving robot according to an embodiment of the present application may be assembly instructions, instruction set architecture (ISA) instructions, machine instructions, machine-related instructions, microcode, firmware instructions, state setting data, or source or object code written in any combination of one or more programming languages including object-oriented programming languages such as Smalltalk, C + +, or the like, and conventional procedural programming languages such as "C" or similar programming languages. The computer readable program instructions may be executed entirely on a user computer, partly on the user computer, as a separate software package, partly on the user computer and partly on a remote computer, or entirely on the remote computer or server. In the case of the remote computer, the remote computer may be connected to the user computer through any kind of network, including a local area network (LAN) or a wide area network (WAN), or may be connected to an external computer (e.g., connected through the Internet using an Internet service provider). In some embodiments, various aspects of the present application are implemented by personalizing an electronic circuit for executing the computer-readable program instructions, such as a programmable logic circuit, a Field Programmable Gate Array (FPGA), or a Programmable Logic Array (PLA), with the status information of the computer-readable program instructions.

Various aspects of the obstacle crossing method of the self-moving robot according to an embodiment of the present application are described herein with reference to a flowchart and/or a block diagram of a method, an apparatus (system) and a computer program product according to an embodiment of the present application. It should be understood that each block of the flowcharts and/or block diagrams, and combinations of blocks in the flowcharts and/or block diagrams, may be implemented by computer readable program instructions.

These computer readable program instructions may be provided to a processor of a general purpose computer, special purpose computer, or other programmable data processing apparatus to produce a machine such that, when executed by the processor of the computer or other programmable data processing apparatus, the instructions produce means for implementing the functions/acts specified in one or more blocks of the flowchart and/or block diagram. The computer-readable program instructions may further be stored in a computer-readable storage medium so that the computer-readable program instructions cause a computer, programmable data processing apparatus, and/or other device to operate in a particular manner. Therefore, the computer-readable medium having the instructions stored thereon includes an article of manufacture that includes instructions that implement various aspects of the functions/acts specified in one or more blocks of the flowchart and/or block diagram.

Computer readable program instructions may further be loaded onto a computer, other programmable data processing apparatus, or another device such that a series of operational steps are performed on the computer, other programmable data processing apparatus, or another device to produce a computer-implemented process. Therefore, the instructions that execute on the computer, other programmable data processing apparatus, or other device implement the functions/actions specified in one or more blocks of the flowcharts and/or block diagrams.

The flowcharts and block diagrams in the drawings illustrate architectures, functions, and operations possibly implemented by systems, methods, and computer program products according to various embodiments of the present application. In this regard, each block in a flowchart or block diagram may represent a portion of a module, program segment, or an instruction, and the portion includes one or more executable instructions for implementing a specified logical function. In some alternative implementations, the functions noted in the blocks may also occur in an order different from that noted in the drawings. For example, two successive blocks may actually be executed substantially in parallel, and they may sometimes be executed in the reverse order, depending on the function involved. It is also noted that each block of the block diagrams and/or flowcharts, and one or more combinations of blocks in the block diagrams and/or flowcharts, may be implemented with a dedicated hardware-based system that performs the specified functions or actions, or may be implemented with a combination of dedicated hardware and computer instructions.

## Claims

1. An obstacle crossing method of a self-moving robot, the self-moving robot including an active obstacle crossing component and configured to perform a cleaning task based on a preset cleaning frequency (f), the preset cleaning frequency (f) referring to a number of times (P) the cleaning task is performed within a preset time period (T,T1,T2), **characterized in that** the obstacle crossing method includes:
identifying (S202) a type of an obstacle in a cleaning path during the cleaning task, and determining whether the obstacle is a first type of obstacle or a second type of obstacle according to a height rule, wherein a height of the first type of obstacle is less than a first height, so that the self-moving robot is capable of crossing over the first type of obstacle without activating the active obstacle-crossing component, and a height of the second type of obstacle is greater than the first height and less than a second height. so that the self-moving robot is capable of crossing over the second type of obstacle by activating the active obstacle-crossing component;
in response to determining that the obstacle is the first type of obstacle, obtaining a first obstacle crossing frequency (f1) for the first type of obstacle, wherein the first obstacle crossing frequency (f1) is less than or equal to the preset cleaning frequency (f), and the first obstacle crossing frequency (f1) refers to the number of times (P1) the self-moving robot crosses over the first type of obstacle within the preset time period (T,T1,T2); crossing over or not crossing over the first type of obstacle based on the first obstacle crossing frequency (f1); and cleaning a first target region behind the first type of obstacle in the case that the self-moving robot crosses over the first type of obstacle, or continuing to perform the cleaning task in the case that the self-moving robot does not cross over the first type of obstacle (S204); and
in response to determining that the obstacle is the second type of obstacle, obtaining a second obstacle crossing frequency (f2) for the second type of obstacle, wherein the second obstacle crossing frequency (f2) is less than the preset cleaning frequency (f) and the second obstacle crossing frequency (f2) refers to the number of times (P2) the self-moving robot crosses over the second type of obstacle within the preset time period (T,T1,T2); crossing over or not crossing over the second type of obstacle based on the second obstacle crossing frequency (f2), and cleaning a second target region behind the second type of obstacle in the case that the self-moving robot crosses over the second type of obstacle; or continuing to perform the cleaning task in the case that the self-moving robot does not cross over the second type of obstacle (S206), to reduce a number of times the self-moving robot activates an active obstacle crossing component and a number of times (P2) the self-moving robot crosses over the second type of obstacle.

2. The obstacle crossing method of claim 1, **characterized in that** the first obstacle crossing frequency (f1) is a frequency at which the self-moving robot directly crosses over the first type of obstacle, and the second obstacle crossing frequency (f2) is a frequency at which the self-moving robot crosses over the second type of obstacle by using the active obstacle crossing component, so that the self-moving robot performs different obstacle crossing strategies on the first type of obstacle and the second type of obstacle, respectively.

3. The obstacle crossing method of claim 1, **characterized in that** the first height is a maximum height of the obstacle that the self-moving robot cross over in the case that the active obstacle crossing component is not activated, and the second height is a maximum height of the obstacle that the self-moving robot cross over in the case that the active obstacle crossing component is activated.

4. The obstacle crossing method of claim 1, **characterized in that** the first type of obstacle includes a plurality of first type of obstacles, each of the first type of obstacles has the corresponding first obstacle crossing frequency (f1), the second type of obstacle includes a plurality of second type of obstacles, and each of the second type of obstacles has the corresponding second obstacle crossing frequency, to perform different obstacle crossing strategies for the different obstacles, respectively.

5. The obstacle crossing method of claim 1, **characterized in that** the second obstacle crossing frequency (f2) is less than the first obstacle crossing frequency (f1), to reduce the number of times (P2) the self-moving robot crosses over the second type of obstacle and the number of times the active obstacle crossing component is activated.

6. The obstacle crossing method of claim 1, **characterized in that** the performing of the cleaning task in the case that the self-moving robot does not cross over the first type of obstacle includes:
adding (S302) a first virtual wall corresponding to the first type of obstacle to a cleaning map corresponding to the cleaning task; and
performing (S304) a first path planning based on the first virtual wall and a remaining portion of the cleaning task; and
performing (S306) the remaining portion of the cleaning task based on the first path planning without crossing over the first type of obstacle, to improve cleaning efficiency.

7. The obstacle crossing method of claim 1, **characterized in that** the performing of the cleaning task in the case that the self-moving robot does not cross over the second type of obstacle includes:
adding (S402) a second virtual wall corresponding to the second type of obstacle to a cleaning map corresponding to the cleaning task;
performing (S404) a second path planning based on the second virtual wall and a remaining portion of the cleaning task; and
performing (S406) the remaining portion of the cleaning task based on the second path planning without crossing over the second type of obstacle, to improve cleaning efficiency.

8. The obstacle crossing method of claim 1, **characterized in that** the cleaning of the second target region behind the second type of obstacle in the case that the self-moving robot crosses over the second type of obstacle includes:
when moving to a position within a preset distance from the second type of obstacle, activating the active obstacle crossing component to raise a height of at least a portion of a bottom of the self-moving robot, to allow the self-moving robot to cross over the second type of obstacle having the height greater than the first height and less than the second height, thereby increasing a success rate in crossing obstacle.

9. The obstacle crossing method of claim 1, **characterized in that** a height of the first type of obstacle and a height of the second type of obstacle are determined by a structured light module in the self-moving robot by collecting point cloud data of the first type of obstacle and point cloud data of the second type of obstacle, respectively, to improve accuracy of determining the height of the first type of obstacle and the height of the second type of obstacle.

10. An obstacle crossing system (502) of a self-moving robot, the self-moving robot including an active obstacle crossing component and configured to perform a cleaning task based on a preset cleaning frequency (f), the preset cleaning frequency (f) referring to a number of times (P) the cleaning task is performed within a preset time period (T,T1,T2), **characterized in that** the obstacle crossing system (502) includes:
an identification module (502), configured to identify a type of an obstacle in a cleaning path during the cleaning task, and determine whether the obstacle is a first type of obstacle or a second type of obstacle according to a height rule, wherein a height of the first type of obstacle is less than a first height, so that the self-moving robot is capable of crossing over the first type of obstacle without activating the active obstacle-crossing component, and a height of the second type of obstacle is greater than the first height and less than a second height, so that the self-moving robot is capable of crossing over the second type of obstacle by activating the active obstacle-crossing component;
a first obstacle crossing module (504), configured to obtain a first obstacle crossing frequency (f1) corresponding to the first type of obstacle in response to determining that the obstacle is the first type of obstacle, wherein the first obstacle crossing frequency (f1) is less than or equal to the preset cleaning frequency (f), and the first obstacle crossing frequency (f1) refers to the number of times (P1) the self-moving robot crosses over the first type of obstacle within the preset time period (T,T1,T2), and wherein the self-moving robot crosses over or does not cross over the first type of obstacle based on the first obstacle crossing frequency (f1) and clean a first target region behind the first type of obstacle in the case that the self-moving robot crosses over the first type of obstacle, or continue to perform the cleaning task in the case that the self-moving robot does not cross over the first type of obstacle, and
a second obstacle crossing module (506), configured to obtain a second obstacle crossing frequency (f2) corresponding to the second type of obstacle in response to determining that the obstacle is the second type of obstacle, wherein the second obstacle crossing frequency (f2) is less than the preset cleaning frequency (f) and the second obstacle crossing frequency (f2) refers to the number of times (P2) the self-moving robot crosses over the second type of obstacle within the preset time period (T,T1,T2), and wherein the self-moving robot crosses over or does not to cross over the second type of obstacle based on the second obstacle crossing frequency (f2) and clean a second target region behind the second type of obstacle in the case that the self-moving robot crosses over the second type of obstacle, or continue to perform the cleaning task in the case that the self-moving robot does not cross over the second type of obstacle, to reduce a number of times the self-moving robot activates an active obstacle crossing component and a number of times the self-moving robot (P2) crosses over the second type of obstacle.

11. A computer-readable storage medium, **characterized in that**,
the computer readable storage medium stores a computer program which, when executed by a processor (102), causes the processor (102) to implement the obstacle crossing method of the self-moving robot of any one of claims 1 to 9.

12. A self-moving robot including a memory (104) and a processor (102), wherein a computer program is stored in the memory (104) and the processor (102) is configured to perform the obstacle crossing method of the self-moving robot of any one of claims 1 to 9.

## Patentansprüche

1. Verfahren zum Überqueren von Hindernissen durch einen sich selbst bewegenden Roboter, wobei der sich selbst bewegende Roboter eine aktive Hindernisüberquerungskomponente enthält und so konfiguriert ist, dass er eine Reinigungsaufgabe auf der Grundlage einer voreingestellten Reinigungshäufigkeit (f) durchführt, wobei sich die voreingestellte Reinigungshäufigkeit (f) auf eine Anzahl von Malen (P) bezieht, die die Reinigungsaufgabe innerhalb einer voreingestellten Zeitperiode (T, T1, T2) durchgeführt wird, **dadurch gekennzeichnet, dass** das Verfahren zum Überqueren von Hindernissen Folgendes umfasst:
identifizieren (S202) einer Art eines Hindernisses in einem Reinigungspfad während der Reinigungsaufgabe, und Bestimmen, ob das Hindernis eine erste Art von Hindernis oder eine zweite Art von Hindernis gemäß einer Höhenregel ist, wobei eine Höhe der ersten Art von Hindernis kleiner als eine erste Höhe ist, so dass der sich selbst bewegende Roboter in der Lage ist, die erste Art von Hindernis zu überqueren, ohne die aktive Hindernisüberquerungskomponente zu aktivieren, und eine Höhe der zweiten Art von Hindernis größer als die erste Höhe und kleiner als eine zweite Höhe ist, so dass der sich selbst bewegende Roboter in der Lage ist, die zweite Art von Hindernis durch Aktivierung der aktiven Hindernisüberquerungskomponente zu überqueren,
als Reaktion auf die Feststellung, dass das Hindernis die erste Art von Hindernis ist, Erhalten einer ersten Hindernisüberquerungsfrequenz (f1) für die erste Art von Hindernis, wobei die erste Hindernisüberquerungsfrequenz (f1) kleiner oder gleich der voreingestellten Reinigungshäufigkeit (f) ist, und die erste Hindernisüberquerungsfrequenz (f1) sich auf die Anzahl von Malen (P1) bezieht, die der sich selbst bewegende Roboter die erste Art von Hindernis innerhalb der voreingestellten Zeitperiode (T, T1, T2) überquert; überqueren oder NichtÜberqueren der ersten Art von Hindernis auf der Grundlage der ersten Hindernisüberquerungsfrequenz (f1); und Reinigen eines ersten Zielbereichs hinter der ersten Art von Hindernis in dem Fall, dass der sich selbst bewegende Roboter die erste Art von Hindernis überquert, oder Fortsetzen der Reinigungsaufgabe in dem Fall, dass der sich selbst bewegende Roboter die erste Art von Hindernis nicht überquert (S204); und
als Reaktion auf die Feststellung, dass es sich bei dem Hindernis um die zweite Art von Hindernis handelt, Erhalten einer zweiten Hindernisüberquerungsfrequenz (f2) für die zweite Art von Hindernis, wobei die zweite Hindernisüberquerungsfrequenz (f2) geringer ist als die voreingestellte Reinigungshäufigkeit (f) und die zweite Hindernisüberquerungsfrequenz (f2) sich auf die Anzahl der Überquerungen (P2) des sich selbst bewegenden Roboters über die zweite Art von Hindernis innerhalb des voreingestellten Zeitraums (T, T1, T2) bezieht; überqueren oder Nichtüberqueren der zweiten Art von Hindernis auf der Grundlage der zweiten Hindernisüberquerungsfrequenz (f2), und Reinigen eines zweiten Zielbereichs hinter der zweiten Art von Hindernis in dem Fall, dass der sich selbst bewegende Roboter die zweite Art von Hindernis überquert; oder Fortsetzen der Reinigungsaufgabe in dem Fall, dass der sich selbst bewegende Roboter die zweite Art von Hindernis nicht überquert (S206), um eine Anzahl von Malen, die der sich selbst bewegende Roboter die aktive Hindernisüberquerungskomponente aktiviert, und eine Anzahl von Malen (P2), die der sich selbst bewegende Roboter die zweite Art von Hindernis überquert, zu reduzieren.

2. Verfahren zum Überqueren von Hindernissen nach Anspruch 1, **dadurch gekennzeichnet, dass** die erste Hindernisüberquerungsfrequenz (f1) eine Frequenz ist, bei der der sich selbst bewegende Roboter die erste Art von Hindernis direkt überquert, und die zweite Hindernisüberquerungsfrequenz (f2) eine Frequenz ist, bei der der sich selbst bewegende Roboter die zweite Art von Hindernis unter Verwendung der aktiven Hindernisüberquerungskomponente überquert, so dass der sich selbst bewegende Roboter unterschiedliche Hindernisüberquerungsstrategien für die erste bzw. die zweite Art von Hindernis durchführt.

3. Verfahren zum Überqueren von Hindernissen nach Anspruch 1, **dadurch gekennzeichnet, dass** die erste Höhe eine maximale Höhe des Hindernisses ist, das der sich selbst bewegende Roboter überquert, wenn die aktive Hindernisüberquerungskomponente nicht aktiviert ist, und die zweite Höhe eine maximale Höhe des Hindernisses ist, das der sich selbst bewegende Roboter überquert, wenn die aktive Hindernisüberquerungskomponente aktiviert ist.

4. Verfahren zum Überqueren von Hindernissen nach Anspruch 1, **dadurch gekennzeichnet, dass** die erste Art von Hindernis eine Vielzahl von Hindernissen der ersten Art umfasst, wobei jedes Hindernis der ersten Art die entsprechende erste Hindernisüberquerungsfrequenz (f1) aufweist, die zweite Art von Hindernis eine Vielzahl von Hindernissen der zweiten Art umfasst und jedes Hindernis der zweiten Art die entsprechende zweite Hindernisüberquerungsfrequenz aufweist, um jeweils verschiedene Hindernisüberquerungsstrategien für die verschiedenen Hindernisse durchzuführen.

5. Verfahren zum Überqueren von Hindernissen nach Anspruch 1, **dadurch gekennzeichnet, dass** die zweite Hindernisüberquerungsfrequenz (f2) geringer ist als die erste Hindernisüberquerungsfrequenz (f1), um die Anzahl der Überquerungen (P2) des sich selbst bewegenden Roboters über die zweite Art von Hindernis und die Anzahl der Aktivierungen der aktiven Hindernisüberquerungskomponente zu verringern.

6. Verfahren zum Überqueren von Hindernissen nach Anspruch 1, **dadurch gekennzeichnet, dass** die Durchführung der Reinigungsaufgabe in dem Fall, dass der sich selbst bewegende Roboter das Hindernis der ersten Art nicht überquert, Folgendes umfasst:
hinzufügen (S302) einer ersten virtuellen Wand, die der ersten Art von Hindernis entspricht, zu einer Reinigungskarte, die der Reinigungsaufgabe entspricht; und
durchführen (S304) einer ersten Pfadplanung auf der Grundlage der ersten virtuellen Wand und eines verbleibenden Teils der Reinigungsaufgabe; und
durchführen (S306) des verbleibenden Teils der Reinigungsaufgabe auf der Grundlage der ersten Pfadplanung ohne Überquerung der ersten Art von Hindernis, um die Reinigungseffizienz zu verbessern.

7. Verfahren zum Überqueren von Hindernissen nach Anspruch 1, **dadurch gekennzeichnet, dass** die Durchführung der Reinigungsaufgabe für den Fall, dass der sich selbst bewegende Roboter die zweite Art von Hindernis nicht überquert, Folgendes umfasst:
hinzufügen (S402) einer zweiten virtuellen Wand, die der zweiten Art von Hindernis entspricht, zu einer Reinigungskarte, die der Reinigungsaufgabe entspricht,
durchführen (S404) einer zweiten Pfadplanung auf der Grundlage der zweiten virtuellen Wand und eines verbleibenden Teils der Reinigungsaufgabe; und
durchführen (S406) des verbleibenden Teils der Reinigungsaufgabe auf der Grundlage der zweiten Pfadplanung ohne Überqueren der zweiten Art von Hindernis, um die Reinigungseffizienz zu verbessern.

8. Verfahren zum Überqueren von Hindernissen nach Anspruch 1, **dadurch gekennzeichnet, dass** die Reinigung des zweiten Zielbereichs hinter der zweiten Art von Hindernis für den Fall, dass der sich selbst bewegende Roboter die zweite Art von Hindernis überquert, Folgendes umfasst:
beim Bewegen zu einer Position innerhalb eines voreingestellten Abstands von der zweiten Art von Hindernis, Aktivieren der aktiven Hindernisüberquerungskomponente, um eine Höhe von mindestens einem Teil eines Bodens des sich selbst bewegenden Roboters anzuheben, um dem sich selbst bewegenden Roboter zu ermöglichen, die zweite Art von Hindernis zu überqueren, dessen Höhe größer als die erste Höhe und kleiner als die zweite Höhe ist, wodurch eine Erfolgsrate beim Überqueren des Hindernisses erhöht wird.

9. Verfahren zum Überqueren von Hindernissen nach Anspruch 1, **dadurch gekennzeichnet, dass** eine Höhe der ersten Art von Hindernis und eine Höhe der zweiten Art von Hindernis durch ein Modul für strukturiertes Licht in dem sich selbst bewegenden Roboter bestimmt werden, indem Punktwolkendaten der ersten Art von Hindernis bzw. Punktwolkendaten der zweiten Art von Hindernis gesammelt werden, um die Genauigkeit der Bestimmung der Höhe der ersten Art von Hindernis und der Höhe der zweiten Art von Hindernis zu verbessern.

10. Hindernisüberquerungssystem (502) eines sich selbst bewegenden Roboters, wobei der sich selbst bewegende Roboter eine aktive Hindernisüberquerungskomponente enthält und so konfiguriert ist, dass er eine Reinigungsaufgabe auf der Grundlage einer voreingestellten Reinigungshäufigkeit (f) durchführt, wobei sich die voreingestellte Reinigungshäufigkeit (f) auf eine Anzahl von Malen (P) bezieht, die die Reinigungsaufgabe innerhalb einer voreingestellten Zeitspanne (T, T1, T2) durchgeführt wird, **dadurch gekennzeichnet, dass** das Hindernisüberquerungssystem (502) enthält:
ein Identifikationsmodul (502), das konfiguriert ist, um eine Art eines Hindernisses in einem Reinigungspfad während der Reinigungsaufgabe zu identifizieren und zu bestimmen, ob das Hindernis eine erste Art von Hindernis oder eine zweite Art von Hindernis gemäß einer Höhenregel ist, wobei eine Höhe der ersten Art von Hindernis kleiner als eine erste Höhe ist, so dass der sich selbst bewegende Roboter in der Lage ist, die erste Art von Hindernis zu überqueren, ohne die aktive Hindernisüberquerungskomponente zu aktivieren, und eine Höhe der zweiten Art von Hindernis größer als die erste Höhe und kleiner als eine zweite Höhe ist, so dass der sich selbst bewegende Roboter in der Lage ist, die zweite Art von Hindernis zu überqueren, indem die aktive Hindernisüberquerungskomponente aktiviert wird,
ein erstes Hindernisüberquerungsmodul (504), das konfiguriert ist, um eine erste Hindernisüberquerungsfrequenz (f1) zu erhalten, die der ersten Art von Hindernis entspricht, als Reaktion auf die Bestimmung, dass das Hindernis die erste Art von Hindernis ist, wobei die erste Hindernisüberquerungsfrequenz (f1) kleiner oder gleich der voreingestellten Reinigungshäufigkeit (f) ist, und die erste Hindernisüberquerungsfrequenz (f1) sich auf die Anzahl von Malen (P1) bezieht, die der sich selbst bewegende Roboter die erste Art von Hindernis innerhalb der voreingestellten Zeitperiode (T, T1, T2) überquert, und wobei der sich selbst bewegende Roboter die erste Art von Hindernis basierend auf der ersten Hindernisüberquerungsfrequenz (f1) überquert oder nicht überquert und einen ersten Zielbereich hinter der ersten Art von Hindernis in dem Fall reinigt, dass der sich selbst bewegende Roboter die erste Art von Hindernis überquert, oder mit der Durchführung der Reinigungsaufgabe in dem Fall fortfährt, dass der sich selbst bewegende Roboter die erste Art von Hindernis nicht überquert; und
ein zweites Hindernisüberquerungsmodul (506), das konfiguriert ist, um eine zweite Hindernisüberquerungsfrequenz (f2) zu erhalten, die der zweiten Art von Hindernis entspricht, als Reaktion auf die Bestimmung, dass das Hindernis die zweite Art von Hindernis ist, wobei die zweite Hindernisüberquerungsfrequenz (f2) geringer ist als die voreingestellte Reinigungshäufigkeit (f) und die zweite Hindernisüberquerungsfrequenz (f2) sich auf die Anzahl von Malen (P2) bezieht, die der sich selbst bewegende Roboter die zweite Art von Hindernis innerhalb der voreingestellten Zeitperiode (T, T1, T2) überquert, und wobei der sich selbst bewegende Roboter die zweite Art von Hindernis basierend auf der zweiten Hindernisüberquerungsfrequenz (f2) überquert oder nicht überquert und einen zweiten Zielbereich hinter der zweiten Art von Hindernis in dem Fall reinigt, dass der sich selbst bewegende Roboter die zweite Art von Hindernis überquert, oder die Reinigungsaufgabe in dem Fall fortsetzt, dass der sich selbst bewegende Roboter die zweite Art von Hindernis nicht überquert, um die Anzahl der Aktivierungen der aktiven Hindernisüberquerungskomponente durch den sich selbst bewegenden Roboter und die Anzahl der Überquerungen der zweiten Art von Hindernis durch den sich selbst bewegenden Roboter (P2) zu verringern.

11. Ein computerlesbares Speichermedium, **dadurch gekennzeichnet, dass** das computerlesbare Speichermedium ein Computerprogramm speichert, das, wenn es von einem Prozessor (102) ausgeführt wird, den Prozessor (102) veranlasst, das Hindernisüberquerungsverfahren des sich selbst bewegenden Roboters nach einem der Ansprüche 1 bis 9 durchzuführen.

12. Sich selbst bewegender Roboter mit einem Speicher (104) und einem Prozessor (102), wobei ein Computerprogramm in dem Speicher (104) gespeichert ist und der Prozessor (102) so konfiguriert ist, dass er das Hindernisüberquerungsverfahren des sich selbst bewegenden Roboters nach einem der Ansprüche 1 bis 9 durchführt.

## Revendications

1. Méthode de franchissement d'obstacles par un robot automoteur, le robot automoteur comprenant un composant actif de franchissement d'obstacles et configuré pour effectuer une tâche de nettoyage sur la base d'une fréquence de nettoyage prédéfinie (f), la fréquence de nettoyage prédéfinie (f) se référant à un nombre de fois (P) que la tâche de nettoyage est effectuée au cours d'une période de temps prédéfinie (T, T1, T2), **caractérisée par le fait que** la méthode de franchissement d'obstacles comporte les éléments suivants :
identifier (S202) un type d'obstacle dans un chemin de nettoyage pendant la tâche de nettoyage, et déterminer si l'obstacle est un premier type d'obstacle ou un deuxième type d'obstacle selon une règle de hauteur, dans laquelle une hauteur du premier type d'obstacle est inférieure à une première hauteur, de sorte que le robot automoteur est capable de franchir le premier type d'obstacle sans activer le composant actif de franchissement d'obstacles, et qu'une hauteur du deuxième type d'obstacle est supérieure à la première hauteur et inférieure à une deuxième hauteur, de sorte que le robot automoteur est capable de franchir le deuxième type d'obstacle en activant le composant actif de franchissement d'obstacles,
en réponse à la détermination que l'obstacle est le premier type d'obstacle, obtenir une première fréquence de franchissement d'obstacles (f1) pour le premier type d'obstacle, dans laquelle la première fréquence de franchissement d'obstacles (f1) est inférieure ou égale à la fréquence de nettoyage prédéfinie (f), et la première fréquence de franchissement d'obstacles (f1) se réfère au nombre de fois (P1) que le robot automoteur franchit le premier type d'obstacle dans la période de temps prédéfinie (T, T1, T2) ; franchir ou ne pas franchir le premier type d'obstacle en fonction de la première fréquence de franchissement d'obstacles (f1) ; et nettoyer une première région cible derrière le premier type d'obstacle dans le cas où le robot automoteur franchit le premier type d'obstacle, ou continuer à effectuer la tâche de nettoyage dans le cas où le robot automoteur ne franchit pas le premier type d'obstacle (S204) ; et
en réponse à la détermination que l'obstacle est le deuxième type d'obstacle, obtenir une deuxième fréquence de franchissement d'obstacles (f2) pour le deuxième type d'obstacle, dans laquelle la deuxième fréquence de franchissement d'obstacles (f2) est inférieure à la fréquence de nettoyage prédéfinie (f) et la deuxième fréquence de franchissement d'obstacles (f2) se réfère au nombre de fois (P2) que le robot automoteur franchit le deuxième type d'obstacle dans la période de temps prédéfinie (T, T1, T2) ; franchir ou ne pas franchir le deuxième type d'obstacle en fonction de la deuxième fréquence de franchissement d'obstacles (f2), et nettoyer une deuxième région cible derrière le deuxième type d'obstacle dans le cas où le robot automoteur franchit le deuxième type d'obstacle ; ou continuer à exécuter la tâche de nettoyage dans le cas où le robot automoteur ne franchit pas le deuxième type d'obstacle (S206), afin de réduire le nombre de fois où le robot automoteur active un composant actif de franchissement d'obstacles et le nombre de fois (P2) où le robot automoteur franchit le deuxième type d'obstacle.

2. La méthode de franchissement d'obstacles de la revendication 1, **caractérisée par le fait que** la première fréquence de franchissement d'obstacles (f1) est une fréquence à laquelle le robot automoteur franchit directement le premier type d'obstacle, et la deuxième fréquence de franchissement d'obstacles (f2) est une fréquence à laquelle le robot automoteur franchit le deuxième type d'obstacle en utilisant le composant actif de franchissement d'obstacles, de sorte que le robot automoteur exécute différentes stratégies de franchissement d'obstacles sur le premier type d'obstacle et sur le deuxième type d'obstacle, respectivement.

3. La méthode de franchissement d'obstacles de la revendication 1, **caractérisée par le fait que** la première hauteur est une hauteur maximale de l'obstacle que le robot automoteur franchit dans le cas où le composant actif de franchissement d'obstacles n'est pas activé, et la deuxième hauteur est une hauteur maximale de l'obstacle que le robot automoteur franchit dans le cas où le composant actif de franchissement d'obstacles est activé.

4. La méthode de franchissement d'obstacles de la revendication 1, **caractérisée par le fait que** le premier type d'obstacle comprend une pluralité d'obstacles du premier type, chacun des obstacles du premier type ayant la première fréquence de franchissement d'obstacles (f1) correspondante, le deuxième type d'obstacle comprend une pluralité d'obstacles du deuxième type, et chacun des obstacles du deuxième type a la deuxième fréquence de franchissement d'obstacles (f2) correspondante, afin d'exécuter différentes stratégies de franchissement d'obstacles pour les différents obstacles, respectivement.

5. La méthode de franchissement d'obstacles de la revendication 1, **caractérisée par le fait que** la deuxième fréquence de franchissement d'obstacles (f2) est inférieure à la première fréquence de franchissement d'obstacles (f1), afin de réduire le nombre de fois (P2) que le robot automoteur franchit le deuxième type d'obstacle et le nombre de fois que le composant actif de franchissement d'obstacles est activé.

6. La méthode de franchissement d'obstacles de la revendication 1, **caractérisée par le fait que** l'exécution de la tâche de nettoyage dans le cas où le robot automoteur ne franchit pas le premier type d'obstacle comprend :
ajouter (S302) un premier mur virtuel correspondant au premier type d'obstacle à une carte de nettoyage correspondant à la tâche de nettoyage ; et
effectuer (S304) une première planification de trajectoire sur la base du premier mur virtuel et d'une partie restante de la tâche de nettoyage ; et
exécuter (S306) la partie restante de la tâche de nettoyage sur la base de la première planification de trajectoire sans franchir le premier type d'obstacle, afin d'améliorer l'efficacité du nettoyage.

7. La méthode de franchissement d'obstacles de la revendication 1, **caractérisée par le fait que** l'exécution de la tâche de nettoyage dans le cas où le robot automoteur ne franchit pas le second type d'obstacle comprend :
ajouter (S402) un second mur virtuel correspondant au deuxième type d'obstacle à une carte de nettoyage correspondant à la tâche de nettoyage,
effectuer (S404) une seconde planification de trajectoire sur la base du second mur virtuel et d'une partie restante de la tâche de nettoyage ; et
exécuter (S406) la partie restante de la tâche de nettoyage sur la base de la deuxième planification de trajectoire sans franchir le deuxième type d'obstacle, afin d'améliorer l'efficacité du nettoyage.

8. La méthode de franchissement d'obstacles de la revendication 1, **caractérisée par le fait que** le nettoyage de la seconde région cible derrière le second type d'obstacle dans le cas où le robot automoteur franchit le second type d'obstacle comprend :
lorsqu'il se déplace jusqu'à une position située à une distance prédéfinie du deuxième type d'obstacle, activer le composant actif de franchissement d'obstacles pour élever la hauteur d'au moins une partie du fond du robot automoteur, afin de permettre au robot automoteur de franchir le deuxième type d'obstacle dont la hauteur est supérieure à la première hauteur et inférieure à la deuxième hauteur, augmentant ainsi le taux de réussite du franchissement de l'obstacle.

9. La méthode de franchissement d'obstacles de la revendication 1, **caractérisée par le fait qu'**une hauteur du premier type d'obstacle et une hauteur du deuxième type d'obstacle sont déterminées par un module de lumière structurée dans le robot automoteur en collectant des données de nuage de points du premier type d'obstacle et des données de nuage de points du deuxième type d'obstacle, respectivement, afin d'améliorer la précision de la détermination de la hauteur du premier type d'obstacle et de la hauteur du deuxième type d'obstacle.

10. Système de franchissement d'obstacles (502) d'un robot automoteur, le robot automoteur comprenant un composant actif de franchissement d'obstacles et configuré pour effectuer une tâche de nettoyage sur la base d'une fréquence de nettoyage prédéfinie (f), la fréquence de nettoyage prédéfinie (f) se référant à un nombre de fois (P) que la tâche de nettoyage est effectuée au cours d'une période de temps prédéfinie (T, T1, T2), **caractérisé en ce que** le système de franchissement d'obstacles (502) comprend :
un module d'identification (502), configuré pour identifier un type d'obstacle dans un chemin de nettoyage pendant la tâche de nettoyage, et déterminer si l'obstacle est un premier type d'obstacle ou un deuxième type d'obstacle selon une règle de hauteur, dans laquelle une hauteur du premier type d'obstacle est inférieure à une première hauteur, de sorte que le robot automoteur est capable de franchir le premier type d'obstacle sans activer le composant actif de franchissement d'obstacles, et qu'une hauteur du deuxième type d'obstacle est supérieure à la première hauteur et inférieure à une deuxième hauteur, de sorte que le robot automoteur est capable de franchir le deuxième type d'obstacle en activant le composant actif de franchissement d'obstacles,
un premier module de franchissement d'obstacles (504), configuré pour obtenir une première fréquence de franchissement d'obstacles (f1) correspondant au premier type d'obstacle en réponse à la détermination que l'obstacle est le premier type d'obstacle, dans lequel la première fréquence de franchissement d'obstacles (f1) est inférieure ou égale à la fréquence de nettoyage prédéfinie (f), et la première fréquence de franchissement d'obstacles (f1) se réfère au nombre de fois (P1) que le robot automoteur franchit le premier type d'obstacle dans la période de temps prédéfinie (T, T1, T2), et dans lequel le robot automoteur franchit ou ne franchit pas le premier type d'obstacle en fonction de la première fréquence de franchissement d'obstacles (f1) et nettoie une première région cible derrière le premier type d'obstacle dans le cas où le robot automoteur franchit le premier type d'obstacle, ou continue à effectuer la tâche de nettoyage dans le cas où le robot automoteur ne franchit pas le premier type d'obstacle ; et
un second module de franchissement d'obstacles (506), configuré pour obtenir une seconde fréquence de franchissement d'obstacles (f2) correspondant au second type d'obstacle en réponse à la détermination que l'obstacle est le second type d'obstacle, dans lequel la seconde fréquence de franchissement d'obstacles (f2) est inférieure à la fréquence de nettoyage prédéfinie (f) et la seconde fréquence de franchissement d'obstacles (f2) se réfère au nombre de fois (P2) que le robot automoteur franchit le second type d'obstacle dans la période de temps prédéfinie (T, T1, T2), et dans lequel le robot automoteur franchit ou ne franchit pas le deuxième type d'obstacle en fonction de la deuxième fréquence de franchissement d'obstacles (f2) et nettoie une deuxième région cible derrière le deuxième type d'obstacle dans le cas où le robot automoteur franchit le deuxième type d'obstacle, ou continue à effectuer la tâche de nettoyage dans le cas où le robot automoteur ne franchit pas le deuxième type d'obstacle, afin de réduire le nombre de fois où le robot automoteur active un composant actif de franchissement d'obstacles et le nombre de fois où le robot automoteur (P2) franchit le deuxième type d'obstacle.

11. Support de stockage lisible par ordinateur, **caractérisé en ce que**,
le support de stockage lisible par ordinateur stocke un programme informatique qui, lorsqu'il est exécuté par un processeur (102), amène le processeur (102) à mettre en œuvre la méthode de franchissement d'obstacles du robot automoteur de l'une des revendications 1 à 9.

12. Robot automoteur comprenant une mémoire (104) et un processeur (102), dans lequel un programme informatique est stocké dans la mémoire (104) et le processeur (102) est configuré pour exécuter la méthode de franchissement d'obstacles du robot automoteur de l'une des revendications 1 à 9.
